# EUROPÄISCHE PATENTSCHRIFT

(11) **EP 2 187 207 B1**
(45) Veröffentlichungstag und Bekanntmachung des Hinweises auf die Patenterteilung: **30.11.2011**
(21) Anmeldenummer: 09013120.2
(22) Anmeldetag: 16.10.2009
(51) Int. Cl.: G01N 21/78, G01N 31/22

(54) **Vorrichtung zur Bestimmung des Gesamtchlorgehaltes in einer Flüssigkeit und Verfahren zu dessen Herstellung**
Apparatus for determining total amount of chlorine in a fluid and method for its production
Dispositif de détermination de la teneur de chlore totale dans un liquide et procédé pour sa preparation

(30) Priorität: 14.11.2008 DE 102008057471
(43) Veröffentlichungstag der Anmeldung: 19.05.2010
(73) Patentinhaber: AXAGARIUS GmbH & Co. KG, 52355 Düren (DE)
(72) Erfinder: Radmacher, Edmund, Dr., 52349 Düren (DE); Möller, Klaus, Dr., 52249 Eschweiler (DE); Hoffmann, Jürgen, Dr., 52355 Düren (DE)
(74) Vertreter: Paul, Dieter-Alfred

(56) Entgegenhaltungen:
- WO-A2-02/39081
- US-A- 5 811 254
- BAUER ROBERT ET AL: "SIMPLE TEST FOR ESTIMATING FREE CHLORINE." JOURNAL / AMERICAN WATER WORKS ASSOCIATION 1972 NOV, Bd. 64, Nr. 11, November 1972 (1972-11), Seiten 787-789, XP009129847
- "Prodn. of indicator-paper for detection and determn. of active chlorine - comprises application of aq. sodium edetate soln. and soln. of specified thioketone in acetone onto paper, followed by drying" DERWENT, 20. August 1995 (1995-08-20), XP002203598

## Beschreibung

Die Erfindung betrifft eine Vorrichtung zur Bestimmung des Gesamtchlorgehaltes in einer Flüssigkeit, wobei die Vorrichtung einen Indikatorträger aufweist, der als Farbindikator Michlers Thioketon enthält. Die Erfindung betrifft des weiteren ein Verfahren zur Herstellung einer solchen Vorrichtung, wobei der Indikatorträger mit einer Imprägnierlösung, die den Farbindikator enthält, getränkt wird.

Im Stand der Technik sind Teststäbchen zur Bestimmung des Gesamtchlorgehaltes, insbesondere Gesamtchlormengen im Bereich von 0,1 bis 3 ppm in Wasser, bekannt, bei denen ein Indikatorträger in Form eines aus Filterpapier bestehenden Indikatorpapiers auf einem Stäbchen aufgebracht und mit einer Indikatorlösung getränkt ist. In dem Indikatorträger ist ein Farbindikator vorhanden, der unter ausdrücklicher Vermeidung von Kaliumiodid allein aus Michlers Thioketon besteht und mit einem ionischen, fluorierten oberflächenaktiven Mittel kombiniert ist (vgl. EP 1 259 798 Bl, insbesondere Anspruch 1 und Abschnitt [0025]). Durch Zugabe von sauren oder basischen Substanzen wird der pH-Wert des Farbindikators auf 3 bis 8, vorzugsweise 5 eingestellt. Zusätzlich können der Indikatorlösung Stabilisatoren beigefügt sein.

Mit Hilfe des Teststäbchens kann der Gehalt von Gesamtchlor halbquantitativ wie folgt festgestellt werden: ausgehend von 0 ppm Gesamtchlorgehalt schlägt die zunächst gelbe Farbe bei höherem Gesamtchlorgehalt über dunkelgrün bei 0,5 ppm bis blau bei 3 ppm um. Die sich jeweils einstellende Farbe kann dann mit einer Farbvergleichstafel verglichen und der jeweilige Gesamtchlorgehalt anhand der dort den Farben zugeordneten Konzentrationswerten ermittelt werden.

Daneben sind Teststäbchen zur Ermittlung des freien Chlorgehaltes (zur Definition von freiem, gebundenem und Gesamtchlor: Hütter, Wasser und Wassezuntersuchung, 5. Auflage, 1992, Seite 149) in wässrigen Lösungen bekannt. Bei diesen Teststäbchen werden als Farbindikatoren bestimmte Azine, insbesondere Syringaldazine und Vanillinazine, verwendet, wobei deren pH-Wert mittels eines Puffers auf einen Wert von 3,5 bis 8,5 eingestellt wird. Für die Bestimmung des Gesamtchlorgehaltes sind diese Teststäbchen nicht geeignet.

Der Erfindung liegt die Aufgabe zugrunde, eine Vorrichtung zur Bestimmung des Gesamtchlorgehaltes in einer Flüssigkeit so auszubilden, die sich durch Stabilität, deutlichen Farbumschlag und deshalb hohe Messgenauigkeit auszeichnet. Eine weitere Aufgabe besteht darin, ein Verfahren zur Herstellung einer solchen Vorrichtung bereitzustellen.

Diese Aufgabe wird erfindungsgemäß dadurch gelöst, dass der Indikatorträger als Farbindikator zusätzlich zu Michlers Thioketon zumindest ein Azin sowie ein Iodid, insbesondere Kalium- und/oder Natriumiodid, enthält. Grundgedanke der Erfindung ist es also, für den Farbindikator wenigstens zwei Substanzen zu verwenden, nämlich Michlers Thioketon und zumindest ein Azin, und den Farbindikator mit einem Iodid zu kombinieren. Versuche haben gezeigt, dass hierdurch ein außerordentlich stabiles und damit hohe Messgenauigkeit gewährleistendes System mit deutlich erkennbarem Farbumschlag gefunden worden ist, das sich vor allem zur schnellen Bestimmung des Gesamtchlorgehaltes in wässrigen Flüssigkeiten eignet, insbesondere für den Bereich von 0,1 bis 10 mg/l Gesamtchlorgehalt. Dabei ist die Vorrichtung zweckmäßigerweise als Teststäbchen mit einer Schicht aus einer saugfähigen Matrix, beispielsweise aus Filterpapier, die mittels einer Imprägnierlösung getränkt ist, ausgebildet.

In Ausbildung der Erfindung ist vorgesehen, dass der Farbindikator in dem Indikatorträger in einer solchen Konzentration und in einem solchen Mischungsverhältnis zwischen Michlers Thioketon und Azin(en) vorliegt, dass die Farbentwicklung beim Eintauchen in eine Flüssigkeit mit 0 mg/l Gesamtchlor gelb ist und bei Erhöhung des Gesamtchlorgehaltes bis 10 mg/l einen Farbwechsel über grün nach blau erzeugt.

Das Gewichtsverhältnis von Michlers Thioketon und Azin(en) liegt zweckmäßigerweise im Bereich von 1:5 bis 1:20, vorzugsweise von 1:12. In diesem Bereich erzielt die Kombination aus den beiden Farbindikatoren eine besonders gute Wirkung.

Als Azin(e) empfehlen sich Syringaldazin oder Vanillinazin, vorzugsweise eine Kombination von beiden. In diesem Fall sollte das Gewichtsverhältnis zwischen beiden 1:1 bis 1:3 betragen, vorzugsweise 1:1,6.

was das Iodid, insbesondere Kalium- oder Natriumiodid betrifft, ist es zweckmäßig, wenn das Iodid und der Farbindikator in dem Indikatorträger in einem Gewichtsverhältnis von 1:1 bis 1:3 vorhanden sind, vorzugsweise in einem Gewichtsverhältnis von 1:2,3.

Um die Stabilität des Farbindikators zu optimieren, sollte in dem Indikatorträger auch ein Stabilisator vorhanden sein, beispielsweise Phenylsemicarbazid. Es ist zweckmäβig, wenn der Stabilisator und der Farbindikator in dem Indikatorträger in einem Gewichtsverhältnis von 1:1 bis 1:3 vorliegt, vorzugsweise 1:2,2.

In dem Indikatorträger sollte auch eine Puffersubstanz zur Einstellung des pH-Wertes des Farbindikators enthalten sein. Hierdurch sollte der pH-Wert im Bereich von 3 bis 8, vorzugsweise von 4 bis 6, besser noch von 5 eingestellt werden. Die Puffersubstanzen können Phosphatsalze sein, in diesem Fall vorzugsweise Kaliumdihydrogenphosphat und Di-Natriumhydrogenphosphat.

Der zweite Teil der Aufgabe wird erfindungsgemäß dadurch gelöst, dass der Indikatorträger mit zumindest einer Imprägnierlösung getränkt wird, welche als zusätzlichen Farbindikator zumindest ein Azin und welche ein Iodid, insbesondere Kaliumiodid, enthält. Dabei kommen als Azin(e) Syringaldazin und/oder Vanillinazin in Frage. Das Gewichtsverhältnis in der Imprägnierlösung zwischen diesen sollte 1:1 bis 1:3 betragen, vorzugsweise 1:1,6.

Nach einem weiteren Merkmal der Erfindung ist vorgesehen, dass der Indikatorträger zunächst mit einer ersten Imprägnierlösung getränkt wird, die das Iodid enthält, und dass der Indikatorträger in einem weiteren Schritt, vorzugsweise nach Trocknung des Indikatorträgers, mit einer zweiten Imprägnierlösung getränkt wird, die den Farbindikator enthält. Diese verfahrensweise hat sich als vorteilhaft erwiesen.

Das Iodid kann in der ersten Imprägnierlösung in einem Gemisch aus destilliertem Wasser und zumindest einem Alkohol, vorzugsweise Ethanol, gelöst werden. Dabei sollte der Volumenanteil des Alkohols im Verhältnis zum Wasser weniger als 50%, vorzugsweise 30% betragen. Das Iodid liegt in der ersten Imprägnierlösung zweckmäßigerweise mit einem Gewichtsanteil von 0,05 bis 5 g/l, vorzugsweise 0,5 g/l, vor.

In der ersten Imprägnierlösung sollten auch Di-Natriumhydrogenphosphat und/oder Kaliumdihydrogenphosphat gelöst sein und der pH-Wert der ersten Imprägnierlösung mittels einer Säure, insbesondere Salzsäure, auf einen pH-Wert von 3 bis 8, vorzugsweise von 4 bis 6, besser noch von 5 eingestellt werden.

In der zweiten Imprägnierlösung sollte der Farbindikator in Azeton gelöst werden. Der Anteil von Michlers Thioketon in der zweiten Imprägnierlösung sollte bei 0,04 bis 4 g/l, vorzugsweise bei 0,22 g/l liegen. Zusätzlich sollte in der zweiten Imprägnierlösung auch ein Stabilisator hinzugefügt werden, beispielsweise Phenylsemicarbazid. Er sollte in einer Menge von 0,04 bis 4 g/l, vorzugsweise 0,1 g/l zugegeben werden.

Bei der Herstellung eines Teststäbchens mit der erfindungsgemäßen Imprägnierlösung wird beispielhaft wie folgt vorgegangen:

In einem Gemisch aus 70 ml destilliertem Wasser und 30 ml Ethanol werden gelöst:
0,19 g Dinatriumhydrogenphosphat,
1,03 g Kaliumdihydrogenphosphat, und
0,05 g Kaliumiodid.

Anschließend wird der pH-Wert der Lösung mit Salzsäure auf pH 5,0 eingestellt und der aus einem Filterpapier bestehende Indikatorträger mit dieser Imprägnierlösung getränkt. Anschließend wird der Indikatorträger getrocknet.

In einem zweiten Schritt werden in 250 ml Azeton gelöst:
0,25 g Syringaldazin,
0,40 g Vanillinazin,
0,055 g Michlers Thioketon, und
0,025 g 1-Phenylsemicarbazid.

Mit dieser Imprägnierlösung wird der Indikatorträger ebenfalls imprägniert. Nach Trocknung wird der Indikatorträger auf eine Teststäbchenfolie aufgeklebt.

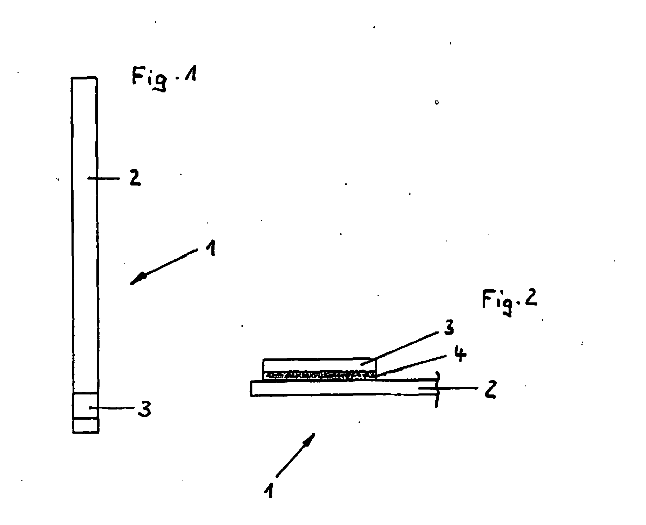

In der Zeichnung ist die Erfindung anhand eines Ausführungsbeispiels veranschaulicht. Es zeigt ein Teststäbchen 1. Das Teststäbchen 1 hat ein Trägerstäbchen 2 rechteckigen Umrisses, im Bereich dessen einen Endes ein Indikatorträger 3 mittels einer Klebstoffschicht 4 befestigt ist. Der Indikatorträger 3 ist mit den oben beispielhaft beschriebenen Imprägnierlösungen getränkt worden.

Für die Ermittlung des Gesamtchlorgehaltes in einer wässrigen Flüssigkeit wird das Teststäbchen 1 in der Lösung für 15 Sekunden hin- und herbewegt. Bei Anwesenheit von Gesamtchlor von 0,1 mg/l färbt sich der Indikatorträger 3 gelb/grün, bei 0,5 mg/l dunkelgrün und bei 10 mg/l dunkelblau. Durch Vergleich mit einer Farbskala lässt sich der Gesamtchlorgehalt halbquantitativ in den Konzentrationsabstufungen 0,1, 0,5, 1, 3 und 10 mg/l messen. Ist kein Chlor vorhanden, färbt sich der Indikatorträger gelb.

## Patentansprüche

1. Vorrichtung (1) zur Bestimmung von Gesamtchlor in Flüssigkeiten, wobei die Vorrichtung (1) einen Indikatorträger (3) aufweist, der mit einem Farbindikator getränkt ist, welcher Michlers Thioketon enthält, **dadurch gekennzeichnet, dass** der Indikatorträger (3) als Farbindikator zusätzlich zumindest ein Azin sowie ein Iodid enthält.

2. Vorrichtung nach Anspruch 1, **dadurch gekennzeichnet, dass** das Gewichtsverhältnis von Michlers Thioketon und Azin(en) im Bereich 1:5 bis 1:20 liegt.

3. Vorrichtung nach Anspruch 1 oder 2, **dadurch gekennzeichnet, dass** als Azin(e) Syringaldazin und/oder Vanillinazin vorhanden ist bzw. sind.

4. Vorrichtung nach Anspruch 3, **dadurch gekennzeichnet, dass** Syringaldazin und Vanillinazin in einem Gewichtsverhältnis von 1:1 bis 1:3 vorhanden sind.

5. Vorrichtung nach einem der Ansprüche 1 bis 4, **dadurch gekennzeichnet, dass** das Iodid und Farbindikator in dem Indikatorträger (3) in einem Gewichtsverhältnis von 1:1 bis 1:3 vorhanden sind.

6. Vorrichtung nach einem der Ansprüche 1 bis 5, **dadurch gekennzeichnet, dass** ein Stabilisator vorhanden ist, wobei der Stabilisator und der Farbindikator in dem Indikatorträger (3) in einem Gewichtsverhältnis von 1:1 bis 1:3 vorliegt.

7. Vorrichtung nach einem der Ansprüche 1 bis 6, **dadurch gekennzeichnet, dass** in dem Indikatorträger (3) eine oder mehrere Puffersubstanzen zur Einstellung des pH-Wertes des Farbindikators auf einen pH-Wert von 3 bis 8 vorhanden ist.

8. Verfahren zur Herstellung einer Vorrichtung (1) zur Bestimmung des Gesamtchlorgehaltes in einer Flüssigkeit, wobei die Vorrichtung einen Indikatorträger (3) aufweist, der mit einer Imprägnierlösung getränkt wird, die einen Farbindikator enthält, der Michlers Thioketon aufweist, **dadurch gekennzeichnet, dass** der Indikatorträger (3) mit zumindest einer Imprägnierlösung getränkt wird, welche als zusätzlichen Farbindikator zumindest ein Azin und ein Iodid enthält.

9. Verfahren nach Anspruch 8, **dadurch gekennzeichnet, dass** als Azin(e) Syringaldazin und/oder Vanillinazin verwendet wird bzw. werden.

10. Verfahren nach einem der Ansprüche 8 oder 9, **dadurch gekennzeichnet, dass** der Indikatorträger (3) zunächst mit einer ersten Imprägnierlösung getränkt wird, die das Iodid enthält, und dass der Indikatorträger (3) in einem weiteren Schritt mit einer zweiten Imprägnierlösung getränkt wird, die den Farbindikator enthält.

11. Verfahren nach Anspruch 10, **dadurch gekennzeichnet, dass** das Iodid in der ersten Imprägnierlösung mit einem Gewichtsanteil von 0,05 bis 5 g/l vorliegt und/oder in der ersten Imprägnierlösung Di-Natriumhydrogenphosphat und/oder Kaliumdihydrogenphosphat gelöst wird.

12. verfahren nach einem der Ansprüche 10 oder 11, **dadurch gekennzeichnet, dass** der pH-Wert der ersten Imprägnierlösung mittels Phosphatsalzen und Salzsäure auf einen pH-Wert von 3 bis 8 eingestellt wird.

13. Verfahren nach einem der Ansprüche 10 bis 12, **dadurch gekennzeichnet, dass** der Farbindikator in der zweiten Imprägnierlösung in Azeton gelöst wird und/oder der Anteil von Michlers Thioketon in der zweiten Imprägnierlösung bei 0,04 bis 4 g/l liegt.

14. Verfahren nach einem der Ansprüche 10 bis 13, **dadurch gekennzeichnet, dass** der zweiten Imprägnierlösung ein Stabilisator hinzugefügt wird.

15. Verfahren nach Anspruch 14, **dadurch gekennzeichnet, dass** 0,04 bis 4 g/l an Stabilisator hinzugefügt wird.

## Claims

1. An apparatus (1) for determining total chlorine in liquids, the apparatus (1) comprising an indicator carrier (3) that is impregnated with a color indicator that contains Michler's thioketone,
wherein the indicator carrier (3) additionally contains as a color indicator at least one azine as well as an iodide.

2. The apparatus according to Claim 1, wherein the weight ratio of Michler's thioketone to azine(s) is in the range from 1:5 to 1:20, preferably 1:12.

3. The apparatus according to Claim 2, wherein syringaldazine and/or vanillin azine is/are present as (an) azine(s).

4. The apparatus according to Claim 3, wherein syringaldazine and vanillin azine are present at a weight ratio from 1:1 to 1:3.

5. The apparatus according to any of Claims 1 to 4, wherein the iodide and the color indicator are present in the indicator carrier (3) at a weight ratio from 1:1 to 1:3, preferably at a weight ratio of 1:2.3.

6. The apparatus according to any of Claims 1 to 5, wherein the stabilizer and the color indicator are present in the indicator carrier (3) at a weight ratio from 1:1 to 1:3.

7. The apparatus according to any of Claims 1 to 6, wherein one or more buffer substances are present in the indicator carrier (3) in order to adjust the pH of the color indicator to a pH of 3 to 8.

8. A method for manufacturing an apparatus (1) for determining the total chlorine content in a liquid, the apparatus comprising an indicator carrier (3) that is impregnated with an impregnation solution which contains a color indicator that comprises Michler's thioketone,
wherein the indicator carrier (3) is impregnated with at least one impregnation solution which contains at least one azine as an additional color indicator, and which contains an iodide.

9. The method according to Claim 8, wherein syringaldazine and/or vanillin azine is/are used as (an) azine(s).

10. The method according to any of Claims 8 or 9, wherein the indicator carrier (3) is firstly impregnated with a first impregnation solution that contains the iodide; and in a further step the indicator carrier (3) is impregnated with a second impregnation solution that contains the color indicator.

11. The method according to Claim 10, wherein the iodide is present in the first impregnation solution at a weight proportion from 0.05 to 5 g/l, and/or disodium hydrogenphosphate and/or potassium dihydrogenphosphate is dissolved in the first impregnation solution.

12. The method according to any of Claims 10 or 11, wherein the pH of the first impregnation solution is adjusted, by means of phosphate salts and hydrochloric acid, to a pH of 3 to 8.

13. The method according to any of Claims 10 to 12, wherein the color indicator in the second impregnation solution is dissolved in acetone and/or wherein the proportion of Michler's thioketone in the second impregnation solution is 0.04 to 4 g/l.

14. The method according to any of Claims 10 to 13, wherein a stabilizer is introduced into the second impregnation solution.

15. The method according to Claim 14, wherein 0.04 to 4 g/l of stabilizer is introduced, preferably 0.1 g/l.

## Revendications

1. Dispositif (1) servant à déterminer le chlore total dans des liquides sachant que le dispositif (1) présente un support indicateur (3) qui est imprégné d'un indicateur de couleur qui contient de la thiocétone de Michler, **caractérisé en ce que** le support indicateur (3) contient en plus en tant qu'indicateur de couleur au moins une azine et un iodure.

2. Dispositif selon revendication 1, **caractérisé en ce que** le rapport en poids de thiocétone de Michler et d'azine(s) se trouve compris entre 1:5 et 1:20.

3. Dispositif selon revendication 1 ou 2, **caractérisé en ce qu'**en tant qu'azine (s), la syringaldazine et/ou vanillinazine et ou sont disponibles.

4. Dispositif selon revendication 3, **caractérisé en ce que** la syringaldazine et vanillinazine sont disponibles dans un rapport de poids compris entre 1:1 1 et 1:3.

5. Dispositif selon l'une des revendications 1 à 4, **caractérisé en ce que** l'iodure et l'indicateur de couleur sont disponibles dans le support indicateur (3) dans un rapport de poids compris entre 1:1 et 1:3.

6. Dispositif selon l'une des revendications 1 à 5, **caractérisé en ce qu'**un stabilisateur est disponible, sachant que le stabilisateur et l'indicateur de couleur se trouvent dans le support indicateur (3) dans un rapport de poids compris entre 1:1 1 et 1:3.

7. Dispositif selon l'une des revendications 1 à 6, **caractérisé en ce que** dans le support indicateur (3), une ou plusieurs substances tampons sont disponibles pour ajuster la valeur de pH de l'indicateur de couleur sur une valeur de pH comprise entre 3à8.

8. Procédé pour la fabrication d'un dispositif (1) pour déterminer la teneur totale en chlore dans un liquide, sachant que le dispositif présente un support indicateur (3) qui est imbibé d'une solution d'imprégnation, qui contient un indicateur de couleur, qui présente de la thiocétone de Michler, **caractérisé en ce que** le support indicateur (3) est imbibé d'au moins une solution d'imprégnation qui contient en tant qu'indicateur de couleur additionnel au moins une azine et un iodure.

9. Procédé selon revendication 8, **caractérisé en ce qu'**en tant qu'azine (s), de la syringaldazine et/ou vanillinazine est ou sont utilisé/es.

10. Procédé selon l'une des revendications 8 ou 9, **caractérisé en ce que** le support indicateur (3) est ensuite imbibé d'une première solution d'imprégnation, qui contient de l'iodure, et que le support indicateur (3) est imbibé lors d'une autre étape d'une deuxième solution d'imprégnation qui contient l'indicateur de couleur.

11. Procédé selon revendication 10, **caractérisé en ce que** l'iodure se trouve dans la première solution d'imprégnation avec une part en poids comprise entre 0,05 et 5 g/l et/ou dans la première solution d'imprégnation, de l'hydrogènophosphate de sodium et/ou hydrogènophosphate de potassium est dissout.

12. Procédé selon l'une des revendications 10 ou 11, **caractérisé en ce que** la valeur de pH de la première solution d'imprégnation est ajustée à l'aide de sels de phosphate et d'acides chlorhydriques sur une valeur de pH comprise entre 3 et 8.

13. Procédé selon l'une des revendications 10 à 12, **caractérisé en ce que** l'indicateur de couleur est dissous dans la deuxième solution d'imprégnation dans de l'acétone et/ou la part de thiocétone de Michler dans la deuxième solution d'imprégnation est comprise entre 0,04 et 4 g/l.

14. Procédé selon l'une des revendications 10 à 13, **caractérisé en ce qu'**un stabilisateur est ajouté à la deuxième solution d'imprégnation.

15. Procédé selon la revendication 14, **caractérisé en ce que** de 0,04 à 4 g/l de stabilisateur est ajouté.
